# EUROPEAN PATENT SPECIFICATION

(11) **EP 3 347 385 B1**
(45) Date of publication and mention of the grant of the patent: **19.02.2020**
(21) Application number: 16760044.4
(22) Date of filing: 31.08.2016
(51) Int. Cl.: C08F 110/06, C08F 4/657, C08F 4/651

(54) **PROCESS FOR THE PREPARATION OF CATALYST COMPONENTS FOR THE POLYMERIZATION OF OLEFINS**
VERFAHREN ZUR HERSTELLUNG VON KATALYSATORKOMPONENTEN ZUR POLYMERISIERUNG VON OLEFINEN
PROCÉDÉ POUR LA PRÉPARATION DE COMPOSANTS CATALYTIQUES POUR LA POLYMÉRISATION D'OLÉFINES

(30) Priority: 11.09.2015 EP 15184880
(43) Date of publication of application: 18.07.2018
(73) Proprietor: Basell Poliolefine Italia S.r.l., 20127 Milano (IT)
(72) Inventor: VITALE, Gianni, 44122 Ferrara (IT); LIGUORI, Dario, 44122 Ferrara (IT); MORINI, Giampiero, 44122 Ferrara (IT)
(74) Representative: Giberti, Stefano
(86) International application number: PCT/EP2016/070440
(87) International publication number: WO 2017/042058

(56) References cited:
- WO-A1-2015/135903
- WO-A1-2017/042054
- US-A- 4 237 254

## Description

### FIELD OF THE INVENTION

The present disclosure relates to a process for the preparation of catalyst components for the (co)polymerization of olefins, in particular propylene, comprising Mg, Bi, Ti and halogen elements and optionally at least an electron donor compound.

### BACKGROUND OF THE INVENTION

Catalyst components for the polymerization of olefins, such as ethylene and propylene, are widely known in the art and such catalyst may be of the Ziegler-Natta category type. The first catalyst of this type widely used in the industry was based on the use of solid TiCl₃ obtained by reduction of TiCl₄ with aluminum alkyls. The activity and stereospecificity of the catalysts were not so high so that the polymer had to be subjected to a deashing treatment to remove the catalyst residues and to a washing step for removing the atactic polymer (polypropylene) produced. Ziegler-Natta catalysts used industrially comprise a solid catalyst component, constituted by a magnesium dihalide on which are supported a titanium compound and optionally an internal electron donor compound, used in combination with an Al-alkyl compound.

The use of magnesium chloride based supports led to increases in catalyst activities and to the development of various techniques for the production of magnesium chloride based support and deriving catalysts. In both ethylene and propylene polymerization, the catalyst activity is particularly important.

When the Ziegler-Natta catalysts ("ZN catalysts") are to be used for propylene polymerization, they contain an internal donor. Moreover, ZN catalysts are often used together with an external donor (for example an alkoxysilane) which helps in obtaining higher isotacticity. One class of internal donors is constituted by the esters of phthalic acid, diisobutylphthalate being the most used. The phthalates are generally used as internal donors in combination with alkylalkoxysilanes as external donor. This catalyst system is capable of giving good performances in terms of activity, and propylene polymers with high isotacticity and xylene insolubility. It is however of general interest the possibility of increasing the intrinsic capability of the solid catalyst components, particularly of those based on donors different from phthalates, to produce stereoregular polymers. In fact, an intrinsically more stereospecific catalyst component would allow the use of a smaller amount of stereoregulating internal and/or external donor to reach the target of polymer xylene insolubility and this, in turn, would be translated into the possibility of obtaining a higher plant productivity.

Based on this, it would be very convenient to find a way of improving the stereospecificity of a solid catalyst component, and in particular, it would be convenient that this method be of wide applicability.

Performance improvement of ZN catalysts can be obtained by introducing additional substances into the final ZN catalysts or into its magnesium chloride based support. Due to the fact such substances may modifiy the catalyst structure and/or its performances they are also called "modifiers".

US4,237,254 discloses a catalyst preparation in which a magnesium hydroxychloride compound is converted into magnesium chloride based support by reacting it with halogenating agents such as benzoylchloride. Then the support is comilled with a benzoate as internal donor and treated with TiCl₄. In some cases, the support is treated with an additional halogenating agent which can include inorganic compounds like BiCl₃ before the contact with the internal donor. Due to the fact that the comparison runs are not back-to-back, the document does not clarify whether the use of the additional chlorinating agents helps in terms of stereospecificity in connection with the use of benzoates as internal donors. An attempt made by the applicant demonstrated however that when the use of BiCl₃ in the catalyst is associated to the presence of benzoates as internal donors, there is no improvement in activity/stereospecificity. Therefore, the BiCl₃ does not seem to act as an effective modifier under the conditions used in US4,237,254.

Introduction of catalyst modifiers in the support or its Mg compound based precursor may not be efficient if the support or precursor is produced in a large scale and then converted into several types of catalysts differing for specific recipes or further ingredients. As a consequence, for certain types of catalysts, the presence of the modifier in the support may be unnecessary or even undesired. On the other hand, using a large scale plant only to produce small quantity of modified support or precursor would also be inefficient.

Furthermore, if the production of the support or its Mg compound based precursor is a continuous process, the change of product campaign can lead to a significant loss of time and material. In addition, depending on the manufacturing recipe, certain supports or precursor may not be suited to include modifiers without changing their chemical structure and related properties.

It would therefore be useful to have a versatile process to produce modified ZN catalysts allowing the introduction of the modifier in a dedicated way so as not to impact other catalyst preparation routes based on the same starting supports or precursors.

The applicant has now surprisingly found a new process for the preparation of a solid catalyst component showing improvement in activity and/or stereospecificity when polymerizing olefins such as ethylene or propylene.

Furthermore, the process is very effective and versatile, allowing obtaining a ZN modified solid catalyst component starting from an unmodified catalyst precursor.

### SUMMARY OF THE INVENTION

It is therefore an object of the present disclosure a process for the preparation of a solid catalyst component for the (co)polymerization of CH₂=CHR olefins, in which R is hydrogen or hydrocarbyl radical with 1-12 carbon atoms, comprising a Ti compound, a Bi compound and optionally an electron donor on a Mg chloride based support, said process comprising one or more steps (a) carried out at a temperature ranging from 0 to 150°C in which a Mg based compound of formula (MgClₘX₂₋ₘ)·nLB, in which m ranges from 0 to 2, n ranges from 0 to 6, X is, independently R¹, OR¹, -OCOR¹ or O-C(O)-OR¹ group, in which R¹ is a C₁-C₂₀ hydrocarbon group, and LB is a Lewis base, is reacted with a liquid medium comprising a Ti compound, having at least a Ti-Cl bond, in an amount such that the Ti/Mg molar ratio is greater than 3; said process being characterized by the fact that in at least one of said steps (a) a Bi compound is dissolved or dispersed in said liquid medium comprising the titanium compound.

### DETAILED DESCRIPTION OF THE INVENTION

In a particular embodiment the bismuth compound is dissolved or dispersed in a liquid medium comprising a titanium compound of formula Ti(OR¹)_{q-y}Cl_{y}, where q is the valence of titanium and y is a number between 1 and q and R¹ is a C₁-C₂₀ hydrocarbon group.

Among them, particularly preferred are titanium polyhalogenated compounds such as titanium tetrahalides or halogenalcoholates. Preferred specific titanium compounds are TiCl₄ and Ti(OEt)Cl₃

The liquid medium comprising the Ti compound can be a mixture of the Ti compound in another liquid diluent. Preferred diluents are hydrocarbons, optionally chlorinated, that are liquid at room temperature. In a very preferred embodiment the liquid medium consists of the liquid titanium compound.

The magnesium based compound used as a starting compound in the first of the one or more steps (a) is preferably selected among adducts of formula MgCl_{2·}nR¹OH, where n is a number between 0.1 and 6, and R¹ is a hydrocarbon radical having 1-18 carbon atoms. Preferably, n ranges from 1 to 5 and more preferably from 1.5 to 4.5.

The adduct can be suitably prepared by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in the form of spherical particles. Examples of spherical adducts prepared according to this procedure are described in US 4,399,054 and US 4,469,648.

Another useable method for the spherulization is the spray cooling described for example in US 5,100,849 and US 4,829,034. Adducts having the desired final alcohol content can be obtained by directly using the selected amount of alcohol during the adduct preparation.

The above mentioned adduct can be directly reacted with Ti compound or it can be previously subjected to thermal controlled dealcoholation (80-130°C) so as to obtain an adduct in which the number of moles of alcohol is lowered and its porosity increased. When the dealcoholation is carried out, it generally brings the number of moles of alcohol per mole of Mg to less than 3, preferably between 0.1 and 2.5.

The reaction between the Mg based compound, in particular the MgCl₂-alcohol adduct and the Ti compound can be carried out by suspending the Mg based compound in large excess of cold TiCl₄ (generally 0°C); the mixture is heated up to a temperature ranging from 60-140°C and kept at this temperature for 0.1-4 hours, preferably 0.5-2 hours. After that time, stirring is discontinued and after the settlement of the solid particles the liquid phase is removed.

This reaction step (a) can be carried out one or more times under identical or different conditions. For example, the temperature and duration of treatment can be changed. In a preferred embodiment, the number of steps (a) is comprised between 1 and 3.

If used, the electron donor compound can be added in the desired ratios during one or more of the reaction steps (a) between the Mg based compound and the liquid Ti compound.

Preferably the electron donor compound is added at least during the first step (a) of reaction between the Mg based compound and the Ti compound. In some cases such a treatment can be repeated one or two additional times.

In another embodiment, the electron donor compound, as described in WO2004/106388, can be added as a fresh reactant to the solid intermediate catalyst component obtained by the above described reaction between the adduct and the Ti compound.

In a particular embodiment, the reaction step (a) is carried out by a continuous feeding of liquid Ti compound, preferably TiCl₄, in an apparatus and under conditions that are described in WO02/48208. Under this embodiment the Mg based compound is fed batchwise while a continuous stream of liquid Ti compound with the desired temperature profile is fed and a liquid phase containing dissolved reaction product is continuously withdrawn. Under these basic conditions the Bi compound and, optionally, the electron donor can be added at any time during the feeding of the Ti compound.

As mentioned above, in one or more of the reaction steps (a), the liquid medium comprising the titanium compound also comprises a dissolved or dispersed Bi compound.

The Bi compounds preferably do not have Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence +3 are preferred. Among Bi halides, preferred are Bi trichloride and Bi tribromide. The most preferred Bi compound is BiCl₃.

The amount of bismuth compound dispersed or solubilized in the titanium compound ranges from 0.005 to 0.1 mole per mole of Mg, preferably from 0.010 to 0.040.

Although the Bi compound can be added to the reaction system already including the Mg based compound in the liquid medium comprising the Ti compound, it constitutes a preferred embodiment the preparation of a liquid mixture comprising dissolving or dispersing the Bi compound in the liquid medium comprising the Ti compound and then reacting said mixture with the Mg based compound. The reaction conditions described for the reaction step (a) above apply here as well.

The Bi compound can be used in any of the one or more reaction steps (a) which comprises the process of the present disclosure. Preferably however, it is used in only one of the steps (a).

At the end of the last step (a) the solid catalyst component is preferably subjected to washings with hydrocarbon solvents until chloride ions are no longer detectable with the conventional techniques.

The process for the preparation of a solid catalyst component for the (co)polymerization according to the present disclosure allows obtaining a catalyst component having preferably a content of Bi ranging from 0.5 to 40%, more preferably from 0.5 to 35, and even more preferably from 0.5 to 20 or especially from 1 to 20%wt with respect to the total amount of solid catalyst component.

The particles of solid catalyst component have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 to 25%wt with respect to the total weight of solid catalyst component.

The amount of Ti can range from 0.5 to 5% and more preferably from 0.7 to 3%wt with respect to the total weight of solid catalyst component.

It has been observed that the amount of Ti decreases as the amount of Bi increases. As a result, and this is a particular aspect of the present disclosure, the Mg/Ti molar ratio of the disclosed catalyst is greater than the corresponding ratio of the catalyst not containing Bi.

When used, the internal electron donor is selected from the group consisting of ethers, amines, silanes, carbamates, ketones, esters of aliphatic acids, alkyl and aryl esters of optionally substituted aromatic polycarboxylic acids, diol derivatives chosen among monoesters monocarbamates and monoesters monocarbonates or mixtures thereof.

When the internal donor is selected from alkyl and aryl esters of optionally substituted aromatic polycarboxylic acids preferred donors are the esters of phthalic acids. Preferred esters of aliphatic acids are selected from malonic, glutaric, maleic and succinic acids. Specific examples of such esters are n-butylphthalate, diisobutylphthalate, and di-n-octylphthalate.

Preferably, the ethers can be selected from the 1,3 diethers of the formula (I): 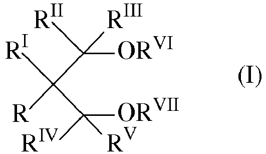 wherein R, R^{I}, R^{II}, R^{III}, R^{IV} and R^{V} are equal to or different from each other, and are hydrogen or hydrocarbon radicals having from 1 to 18 carbon atoms; and R^{VI} and R^{VII} are equal to or different from each other, and have the same meaning of R-R^{V} except that R^{VI} and R^{VII} cannot be hydrogen; one or more of the R-R^{VII} groups can be linked to form a cycle. The 1,3-diethers in which R^{VI} and R^{VII} are selected from C₁-C₄ alkyl radicals are particularly preferred.

It is also possible to use mixtures of the above mentioned donors. Specific mixtures are those constituted by esters of succinic acids and 1,3 diethers as disclosed in WO2011/061134.

When it is desired to increase the capability of the catalyst to distribute an olefin co-monomer within a polymer chain, such as in case of production of ethylene/α-olefin copolymers, it is preferred to choose the electron donor among monofunctional donors, chosen among ethers and C₁-C₄ alkyl esters of aliphatic mono carboxylic acids. Preferred ethers are the C₂-C₂₀ aliphatic ethers and in particular, cyclic ethers preferably having 3-5 carbon atoms cyclic ethers such as tetrahydrofurane, dioxane. Preferred esters are ethylacetate and methyl formiate. Among them tetrahydrofurane and ethylacetate are the most preferred.

In general, the final amount of electron donor compound in the solid catalyst component may range from 0.5 to 40 wt% by weight preferably in the range from 1 to 35 wt% with respect to the toal weight of the solid catalyst component.

It has been observed that also the Mg/donor molar ratio is influenced by the presence of Bi and it is generally greater than the corresponding ratio for catalysts not containing Bi.

In case the donor belongs to alkyl and aryl esters of optionally substituted aromatic polycarboxylic acids, in particular phthalates, the Mg/Ti molar ratio is equal to, or greater than, 13, preferably in the range 14-40, and more preferably from 15 to 40. Correspondingly, the Mg/donor molar ratio is greater than 16, more preferably higher than 17, and usually ranging from 18 to 50.

In case the donor belongs to diethers of formula (I) the Mg/Ti molar ratio is greater than 6, preferably higher than 7, while the Mg/donor molar ratio ranges typically from 9 to 20 and preferably from 10 to 20.

The solid catalyst component obtained according to the present disclosure preferably shows a surface area (by B.E.T. method) generally between 20 and 500 m²/g and preferably between 50 and 400 m²/g, and a total porosity (by B.E.T. method) greater than 0.2 cm³/g, preferably between 0.3 and 0.6 cm³/g. The porosity (Hg method) due to pores with radius up to 10.000Å, generally ranges from 0.3 to 1.5 cm³/g, preferably from 0.45 to 1 cm³/g.

The solid catalyst component has preferably an average particle size ranging from 5 to 120 µm and more preferably from 10 to 100 µm.

The solid catalyst component prepared according to the process of the present disclosure is converted into catalyst for the polymerization of olefins by reacting it with organoaluminum compounds according to known methods.

The organoaluminum compound is preferably chosen from the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

The Al/Ti ratio is greater than 1 and is generally comprised between 50 and 2000, preferably between 50 and 500.

Optionally, an external electron-donor compound can be used. It is prefereably selected from silicon compounds, ethers, esters, amines, heterocyclic compounds and 2,2,6,6-tetramethylpiperidine and ketones. Another class of preferred external donor compounds is that of silicon compounds of formula (R₆)ₐ(R₇)_{b}Si(OR₈)_{c}, where a and b are integers from 0 to 2, c is an integer from 1 to 4 and the sum of (a+b+c) is 4; R₆, R₇, and R₈, are alkyl, cycloalkyl or aryl radicals with 1-18 carbon atoms optionally containing heteroatoms. Particularly preferred are the silicon compounds in which a is 1, b is 1, and c is 2, at least one of R₆ and R₇ is selected from branched alkyl, cycloalkyl or aryl groups with 3-10 carbon atoms optionally containing heteroatoms, and R₈ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, the silicon compounds in which a is 0 and c is 3, R₇ is a branched alkyl or cycloalkyl group, optionally containing heteroatoms, and R₈ is methyl are also preferred. Examples of such preferred silicon compounds are cyclohexyltrimethoxysilane, t-butyltrimethoxysilane and thexyltrimethoxysilane.

The external electron donor compound is used in such an amount to give a molar ratio between the organoaluminum compound and said external electron donor compound of from 0.1 to 500, preferably from 1 to 300, and more preferably from 3 to 100.

The catalyst prepared according to the present disclosure can be used in a process for the (co)polymerization of CH₂=CHR olefins, in which R is hydrogen or a hydrocarbyl radical with 1-12 carbon atoms.

The polymerization process can be carried out according to available techniques, for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is carried out at a temperature of from 20 to 120°C, preferably from 40 to 80°C. When the polymerization is carried out in gas-phase the operating pressure may range between 0.5 and 5 MPa, preferably between 1 and 4 MPa. In the bulk polymerization the operating pressure may range between 1 and 8 MPa, preferably between 1.5 and 5 MPa.

The process of the present disclosure incorporates the Bi compound into the solid catalyst component without the need of including the Bi compound into the Mg based compound used as a support precursor. Accordingly, the Mg based compound can be used also in catalyst preparation recipes which do not involve the use of Bi compounds. The Bi containing catalyst prepared according to the present disclosure shows, in propylene homopolymerization, an increased activity/stereospecificity balance particularly due to increased stereospecificity compared with catalysts prepared under the same conditions but not including bismuth atoms. This may mean that given level of polymer stereoregularity (expressed as percentage of xylene insoluble matter) can be obtained with a lower amount of internal donor with respect to the same catalyst not including bismuth atoms. A more efficient incorporation of donor in the catalyst allows in turn the use of a lower amount of donor in the catalyst preparation process and a reduced generation of by-products in the reaction between Ti compound, Mg compound and internal donor.

In the polymerization conditions indicated in the experimental section, the catalyst component obtained with the process of the present disclosure is able to produce polypropylene with an isotacticity, expressed in terms of xylene insolubility, of at least 98% preferably higher than 98.5 and more preferably higher than 99%.

The following examples are given in order to better illustrate the disclosure without limiting it.

### EXAMPLES

### CHARACTERIZATIONS

### Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible, 0.1 to 0.3 grams of catalyst and 2 grams of lithium metaborate/tetraborate 1/1 mixture. After addition of some drops of KI solution, the crucible was inserted in a "Claisse Fluxy" apparatus for the complete burning. The residue was collected with a 5% v/v HNO₃ solution and then analyzed via ICP at the following wavelengths: Magnesium, 279.08 nm; Titanium, 368.52 nm.

### Determination of Bi

The determination of Bi content in the solid catalyst component has been carried out via inductively coupled plasma emission spectroscopy on "I.C.P Spectrometer ARL Accuris".

The sample was prepared by analytically weighting in a 200 cm³ volumetric flask 0.1 to 0.3 grams of catalyst. After slow addition of both ca. 10 milliliters of 65% v/v HNO₃ solution and ca. 50 cm³ of distilled water, the sample underwent a digestion for 4÷6 hours. Then the volumetric flask was diluted to the mark with deionized water. The resulting solution was directly analyzed via ICP at the following wavelength: Bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Melt flow rate (MIL)

The melt flow rate MIL of the polymer was determined according to ISO 1133 (230°C, 2.16 Kg).

### Procedure for the preparation of the Mg based compound I (spherical adduct)

Microspheroidal MgCl₂·pC₂H₅OH adduct was prepared according to the method described in Example 2 of WO98/44009. The solid spherical particles obtained, containing 57 wt% of ethanol, underwent a dealcoholation step under warm nitrogen flow until the level of ethanol reached 50 wt%.

### Procedure for the preparation of the Mg based compound II (spherical adduct)

Microspheroidal MgCl₂·pC₂H₅OH adduct was prepared according to the method described in Example 2 of WO98/44009, with the difference that BiCl₃ in a powder form and in the amount indicated in Table 1 was added in the step of molten MgCl₂-EtOH adduct preparation. The solid spherical particles obtained, containing 57 wt% of ethanol, underwent a dealcoholation step under warm nitrogen flow until the level of ethanol reached 50 wt%.

### Procedure for the preparation of the Mg based compound III

The synthesis of the precursor was performed as described in Example 1 of US 4,220,554. The so obtained support has the following composition: Mg, 20.2 wt.%; Cl, 29.8 wt.%; EtOH groups 41.5 wt.%.

### Procedure for the preparation of the phthalate-based solid catalyst component

Into a 500 ml round bottom flask, equipped with mechanical stirrer, cooler and thermometer, 300 ml of TiCl₄ were introduced at room temperature under nitrogen atmosphere. After cooling to 0°C, while stirring, BiCl₃ in a powder form and in the amount indicated in Table 1, diisobutylphthalate (DIBP) in the amount indicated in Table 1, and 15.0 g of the Mg based compound I, II or III (prepared as described above) were sequentially added into the flask. The amount of fed internal donor was such to meet a Mg/donor molar ratio indicated in Table 1. The temperature was raised to 100°C and maintained for 1 hour (first step (a)). Thereafter, stirring was stopped, the solid product was allowed to settle, and the supernatant liquid was siphoned off at 100°C. After the supernatant was removed, additional fresh TiCl₄ was added at room temperature together with, if used, diisobutylphthalate in the amount indicated in Table 1 to reach the initial liquid volume again. The mixture was then heated at 120°C and kept at this temperature for 30 minutes (second step (a)). Stirring was stopped again, the solid was allowed to settle and the supernatant liquid was siphoned off at 100°C. After the supernatant was removed, additional fresh TiCl₄ was added at room temperature to reach the initial liquid volume again. The mixture was then heated at 120°C and kept at this temperature for 15 minutes (third step (a)). Stirring was stopped again, the solid was allowed to settle and the supernatant liquid was siphoned off at 100°C. The solid was washed with anhydrous heptane four times in temperature gradient down to 90°C and one time at 25°C. The obtained solid was then dried under vacuum and analyzed.

### Procedure for the preparation of the glutarate-based solid catalyst component

The preparation of the glutarate-based solid catalyst component was the same as the phthalate-based solid catalyst component with the difference that diethyl, 3,3-dipropylglutarate was used instead of diisobutylphthalate and the temperature of the first step (a) was 120 °C instead of 100 °C.

Mg based compound, amount of glutarate, amount of BiCl₃ and Mg/glutarate molar ratio are reported in Table 2.

### General procedure for the polymerization of propylene

A 4-liter steel autoclave equipped with a stirrer, pressure gauge, thermometer, catalyst feeding system, monomer feeding lines and thermostating jacket, was purged with nitrogen flow at 70°C for one hour. A suspension containing 75 ml of anhydrous hexane, 0.76 g of AlEt₃ (6.66 mmol), 0.33 mmol of external donor and 0.006 to 0.010 g of solid catalyst component, previously precontacted for 5 minutes, was charged. Either dicyclopentyldimethoxysilane, D donor, or cyclohexylmethyldimethoxysilane, C donor, were used as external donor as specified in Tables 1 and 2.

The autoclave was closed and the desired amount of hydrogen was added (in particular, 2 NL in D donor tests, 1.5 NL in C donor tests). Then, under stirring, 1.2 kg of liquid propylene was fed. The temperature was raised to 70°C in about 10 minutes and the polymerization was carried out at this temperature for 2 hours. At the end of the polymerization, the non-reacted propylene was removed; the polymer was recovered and dried at 70°C under vacuum for 3 hours. Then the polymer was weighed and characterized.
The polymerization results for the phthalate-based solid catalyst component are reported in Table 1, while the results for the glutarate-based solid catalyst component are reported in Table 2.

**Table 1: Propylene polymerization using phthalate-based solid catalyst components**

| | | Solid Catalyst Component synthesis | | | | Polymerization | | | |
|---|---|---|---|---|---|---|---|---|---|
| | Mg based comp. | Mg/DIBP % mol | Aliquot of DIBP in the 1^{st} step (a) % | Aliquot of DIBP in the 2^{nd} step (a) %. | Mg/Bi % mol | ED type | Yield PPKg /gTi | XI %wt. | MI L g/10min |
| Ex. 1 | I | 8 | 100 | 0 | 40 | C | 55.0 | 98.5 | 7.6 |
| Ex. 2 | I | | | | | D | 66.8 | 99.1 | 2.3 |
| Ex. 3 | I | 10 | 100 | 0 | 20 | C | 63.5 | 98.6 | 6.5 |
| Ex. 4 | I | | | | | D | 64.8 | 98.9 | 2.7 |
| Ex. 5 | I | 10 | 100 | 0 | 40 | C | 60.6 | 98.6 | 8.4 |
| Ex. 6 | I | | | | | D | 75.0 | 99.1 | 2.4 |
| Ex. 7 | I | 10 | 100 | 0 | 100 | C | 61.5 | 98.5 | 5.8 |
| Ex. 8 | I | | | | | D | 72.8 | 98.6 | 2.6 |
| Ex. 9 | I | 10 | 0 | 100 | 40 | C | 55.1 | 98.8 | 7.6 |
| Ex. 10 | I | | | | | D | 61.5 | 99.3 | 2.1 |
| Ex. 11 | I | 10 | 64 | 36 | 40 | C | 57.2 | 98.7 | 6.1 |
| Ex. 12 | I | | | | | D | 58.5 | 99.2 | 1.2 |
| Ex. 13 | III | 10 | 100 | 0 | 60 | C | 67 | 98.7 | 4.0 |
| Ex. 14 | III | | | | | D | 83.2 | 99.2 | 1.1 |
| Comp Ex. 15 | I | 8 | 100 | 0 | - | C | 55.9 | 97.9 | 8.3 |
| Comp Ex. 16 | I | | | | | D | 73.9 | 98.8 | 2.2 |
| Comp Ex. 17 | III | 10 | 100 | 0 | 0 | C | 60.6 | 98.1 | 4.7 |
| Comp Ex. 18 | III | | | | | D | 79.1 | 98.8 | 2.4 |

| | | | | | | | | | |
|---|---|---|---|---|---|---|---|---|---|
| Aliquot of DIBP in the first step (a) + Aliquot of DIBP in the second step (a) = 100 | | | | | | | | | |

**Table 2: Propylene polymerization using glutarate-based solid catalyst components**

| | Solid Catalyst Component synthesis | | | | | Polymerization | | | |
|---|---|---|---|---|---|---|---|---|---|
| | Mg based compound | Mg/Glu % mol | Aliquot of Glu in the 1^{st} step (a) % | Aliquot of Glu in the 2^{nd} step (a) % | Mg/Bi % mol | ED **type** | Yield PPKg/g Ti | XI %wt. | MI L g/10 min |
| Ex. 19 | I | 7 | 50 | 50 | 60 | C | 56.8 | 98.5 | 3.4 |
| Ex. 20 | I | | | | | D | 78.4 | 98.7 | 3.7 |
| Ex. 21 | I | 7 | 50 | 50 | 40 | C | 59.2 | 98.7 | 1.3 |
| Ex. 22 | I | | | | | D | 70.2 | 99.0 | 1.6 |
| Ex. 23 | I | 7 | 50 | 50 | 20 | C | 46.4 | 98.6 | 3.6 |
| Ex. 24 | I | | | | | D | 52.9 | 99.0 | 0.9 |
| Comp Ex. 25 | II | 7 | 50 | 50 | 40 | C | 48.5 | 98.3 | 3.4 |
| Comp Ex. 26 | II | | | | | D | 65.8 | 99.0 | 2.1 |
| Comp Ex. 27 | I | 7 | 50 | 50 | - | C | 47.0 | 97.5 | - |
| Comp Ex. 28 | I | | | | | D | 56.0 | 98.3 | - |

| | | | | | | | | | |
|---|---|---|---|---|---|---|---|---|---|
| Aliquot of Glu in the first step (a) + Aliquot of Glu in the second step (a) = 100 | | | | | | | | | |

## Claims

1. A process for the preparation of a solid catalyst component for the (co)polymerization of olefins CH₂=CHR, in which R is hydrogen or hydrocarbyl radical with 1-12 carbon atoms, comprising a Ti compound, a Bi compound and optionally an electron donor on a Mg chloride based support, said process comprising one or more steps (a) carried out at a temperature ranging from 0 to 150°C in which a Mg based compound of formula (M_{g}ClₘX₂₋ₘ)·nLB, in which m ranges from 0 to 2, n ranges from 0 to 6, X is, independently R¹, OR¹, -OCOR¹ or O-C(O)-OR¹ group in which R¹ is a C₁-C₂₀ hydrocarbon group and LB is a Lewis base, is reacted with a liquid medium comprising a Ti compound having at least a Ti-Cl bond in an amount such that the Ti/Mg molar ratio is greater than 3; said process being **characterized by** the fact that in at least one of said steps (a) a Bi compound is dissolved or dispersed in said liquid medium comprising the titanium compound.

2. The process of claim 1 in which the Bi compound is dissolved or dispersed in a liquid medium comprising a Ti compound of formula Ti(OR¹)_{q-y}Cl_{y}, where q is the valence of the titanium and y is a number between 1 and q and R¹ is a C₁-C₂₀ hydrocarbon group.

3. The process of claim 2 in which the Ti compound is selected from titanium tetrachloride or chloroalcoholates.

4. The process according to claim 1 in which the Mg based compound is selected from adducts of formula M_{g}Cl₂•nR¹OH, where n is a number between 0.1 and 6, and R¹ is a C₁-C₂₀ hydrocarbon group.

5. The process according to claim 4 in which n is from 1 to 5.

6. The process according to claim 1 in which the liquid medium consists of the liquid Ti compound.

7. The process according to claim 6 in which the reaction temperature is from 60 to 140°C.

8. The process of claim 1 in which the number of steps (a) is between 1 and 4.

9. The process of claim 1 in which the Bi compound is selected from Bi halides.

10. The process of claim 1 or 9 in which the amount of Bi compound dispersed or solubilized in the liquid medium comprising the Ti compound is from 0.005 to 0.1 mole per mole of Mg based compound.

11. The process of claim 10 in which the Bi compound dispersed or solubilized in the liquid medium comprising the Ti compound is from 0.010 to 0.040 mole per mole of Mg based compound.

12. The process of claim 1 in which the Bi compound is used in only one of the steps (a).

13. The process of claim 12 comprising at least two steps (a) and in which the Bi compound is used in the first step (a).

14. The process of claim 1 further comprising in the steps (a) the use of an electron donor compound chosen from the group consisting of alkyl and aryl esters of optionally substituted aromatic polycarboxylic acids, esters of malonic acids, esters of glutaric acids, esters of maleic acids, esters of succinic acids, diol derivatives chosen from dicarbamates, monoesters monocarbamates and monoesters monocarbonates, and 1,3 diethers of the formula: 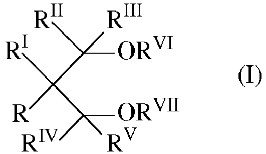 wherein R, R¹, R^{II}, R^{III}, R^{IV} and R^{V} are equal to or different from each other, and are hydrogen or hydrocarbon radicals having from 1 to 18 carbon atoms, and R^{VI} and R^{VII} are equal to or different from each other, and have the same meaning of R-R^{V} except that R^{VI} and R^{VII} cannot be hydrogen; and one or more of the R-R^{VII} groups may be linked to form a cycle.

15. The process according to claim 13 in which the internal donor is used at least in the first step (a).

## Patentansprüche

1. Verfahren zur Herstellung einer festen Katalysatorkomponente zur (Co)polymerisation von Olefinen CH₂=CHR, wobei R Wasserstoff oder ein Kohlenwasserstoffrest mit 1 bis 12 Kohlenstoffatomen ist, umfassend eine Ti-Verbindung, eine Bi-Verbindung und gegebenenfalls einen Elektronendonor auf einem Träger auf Basis von Mg-Chlorid, wobei das Verfahren einen oder mehrere Schritte (a) umfasst, die bei einer Temperatur im Bereich von 0 bis 150 °C durchgeführt werden, wobei eine Verbindung auf Mg-Basis mit der Formel (M_{g}ClₘX₂₋ₘ)·nLB, wobei m im Bereich von 0 bis 2 liegt, n im Bereich von 0 bis 6 liegt, X unabhängig eine Gruppe R¹, OR¹, -OCOR¹ oder O-C(O)-OR¹ ist, in der R¹ eine C₁-bis C₂₀-Kohlenwasserstoffgruppe ist und LB eine Lewis-Base ist, mit einem flüssigen Medium, das eine Ti-Verbindung mit mindestens einer Ti-Cl-Bindung umfasst, in einer Menge umgesetzt wird, so dass das Molverhältnis von Ti/Mg größer als 3 ist, wobei das Verfahren durch die Tatsache gekennzeichnet ist, dass in mindestens einem der Schritte (a) eine Bi-Verbindung in dem flüssigen Medium, das die Titanverbindung umfasst, gelöst oder dispergiert wird.

2. Verfahren nach Anspruch 1, wobei die Bi-Verbindung in einem flüssigen Medium gelöst oder dispergiert wird, das eine Ti-Verbindung mit der Formel Ti(OR¹)_{q-y}Cl_{y} umfasst, wobei q die Wertigkeit des Titans ist und y eine Zahl zwischen 1 und q ist, und R¹ eine C₁-bis C₂₀-Kohlenwasserstoffgruppe ist.

3. Verfahren nach Anspruch 2, wobei die Ti-Verbindung ausgewählt ist aus Titantetrachlorid oder -chloralkoholaten.

4. Verfahren nach Anspruch 1, wobei die Verbindung auf Mg-Basis ausgewählt ist aus Addukten mit der Formel M_{g}Cl₂·nR¹OH, wobei n eine Zahl zwischen 0,1 und 6 ist, und R¹ eine C₁-bis C₂₀-Kohlenwasserstoffgruppe ist.

5. Verfahren nach Anspruch 4, wobei n 1 bis 5 beträgt.

6. Verfahren nach Anspruch 1, wobei das flüssige Medium aus der flüssigen Ti-Verbindung besteht.

7. Verfahren nach Anspruch 6, wobei die Reaktionstemperatur 60 bis 140 °C beträgt.

8. Verfahren nach Anspruch 1, wobei die Anzahl der Schritte (a) zwischen 1 und 4 liegt.

9. Verfahren nach Anspruch 1, wobei die Bi-Verbindung ausgewählt ist aus Bi-Halogeniden.

10. Verfahren nach Anspruch 1 oder 9, wobei die Menge der Bi-Verbindung, die in dem flüssigen Medium, welches die Ti-Verbindung umfasst, dispergiert oder solubilisiert wird, 0,005 bis 0,1 Mol pro Mol der Verbindung auf Mg-Basis beträgt.

11. Verfahren nach Anspruch 10, wobei die Bi-Verbindung, die in dem flüssigen Medium, welches die Ti-Verbindung umfasst, dispergiert oder solubilisiert wird, 0,010 bis 0,040 Mol pro Mol der Verbindung auf Mg-Basis beträgt.

12. Verfahren nach Anspruch 1, wobei die Bi-Verbindung in nur einem der Schritte (a) verwendet wird.

13. Verfahren nach Anspruch 12, das mindestens zwei Schritte (a) umfasst, und in dem die Bi-Verbindung in dem ersten Schritt (a) verwendet wird.

14. Verfahren nach Anspruch 1, des Weiteren umfassend in den Schritten (a) die Verwendung einer Elektronendonorverbindung ausgewählt aus der Gruppe bestehend aus Alkyl- und Arylestern von gegebenenfalls substituierten aromatischen Polycarbonsäuren, Estern von Malonsäuren, Estern von Glutarsäuren, Estern von Maleinsäuren, Estern von Bernsteinsäuren, Diolderivaten ausgewählt aus Dicarbamaten, Monoestern, Monocarbamaten und Monoestern-Monocarbonaten, und 1,3-Diethern mit der folgenden Formel: 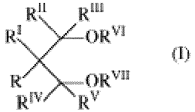 wobei R, R¹, R^{II}, R^{III}, R^{IV} und R^{V} gleich oder voneinander verschieden sind, und Wasserstoff oder Kohlenwasserstoffreste mit 1 bis 18 Kohlenstoffatomen sind, und R^{VI} und R^{VII} gleich oder voneinander verschieden sind und die gleiche Bedeutung wie R bis R^{V} haben, außer dass R^{VI} und R^{VII} nicht Wasserstoff sein können; und dass eine oder mehrere der Gruppen R bis R^{VII} unter Bildung eines Cyclus miteinander verknüpft sein können.

15. Verfahren nach Anspruch 13, wobei der interne Donor mindestens in dem ersten Schritt (a) verwendet wird.

## Revendications

1. Procédé de préparation d'un constituant catalytique solide pour la (co)polymérisation d'oléfines CH₂=CHR, dans lesquelles R représente hydrogène ou un radical hydrocarbyle comprenant 1-12 atomes de carbone, comprenant un composé à base de Ti, un composé à base de Bi et éventuellement un donneur d'électrons sur un support à base de chlorure de Mg, ledit procédé comprenant une ou plusieurs étapes (a) mise(s) en œuvre à une température dans une plage de 0 à 150°C, dans lesquelles un composé à base de Mg de formule (M_{g}ClₘX₂₋ₘ)·nLB, dans laquelle m est situé dans une plage de 0 à 2, n est situé dans une plage de 0 à 6, X représente, indépendamment, un groupe R¹, OR¹, -OCOR¹ ou O-C(O)-OR¹, dans lequel R¹ représente un groupe hydrocarboné en C₁-C₂₀, et LB représente une base de Lewis, est mis à réagir avec un milieu liquide comprenant un composé à base de Ti présentant au moins une liaison T₁-Cl en une quantité telle que le rapport molaire Ti/Mg est supérieur à 3, ledit procédé étant **caractérisé en ce que** dans au moins l'une desdites étapes (a), un composé à base de Bi est dissous ou dispersé dans ledit milieu liquide comprenant le composé à base de titane.

2. Procédé selon la revendication 1, dans lequel le composé Bi est dissous ou dispersé dans un milieu liquide comprenant un composé à base de Ti de formule Ti(OR¹)_{q-y}Cl_{y}, où q représente la valence du titane et y représente un nombre entre 1 et q et R¹ représente un groupe hydrocarboné en C₁-C₂₀.

3. Procédé selon la revendication 2, dans lequel le composé à base de Ti est choisi parmi le tétrachlorure de titane ou les chloroalcoolates de titane.

4. Procédé selon la revendication 1, dans lequel le composé à base de Mg est choisi parmi les produits d'addition de formule M_{g}Cl₂·ₙR¹OH, où n représente un nombre entre 0,1 et 6 et R¹ représente un groupe hydrocarboné en C₁-C₂₀.

5. Procédé selon la revendication 4, dans lequel n vaut de 1 à 5.

6. Procédé selon la revendication 1, dans lequel le milieu liquide est constitué du composé à base de Ti liquide.

7. Procédé selon la revendication 6, dans lequel la température de réaction est de 60 à 140°C.

8. Procédé selon la revendication 1, dans lequel le nombre d'étapes (a) est de 1 à 4.

9. Procédé selon la revendication 1, dans lequel le composé à base de Bi est choisi parmi les halogénures de Bi.

10. Procédé selon la revendication 1 ou 9, dans lequel la quantité de composé à base de Bi dispersé ou solubilisé dans le milieu liquide comprenant le composé à base de Ti est de 0,005 à 0,1 mole par mole de composé à base de Mg.

11. Procédé selon la revendication 10, dans lequel le composé à base de Bi dispersé ou solubilisé dans le milieu liquide comprenant le composé à base de Ti représente 0,010 à 0,040 mole par mole de composé à base de Mg.

12. Procédé selon la revendication 1, dans lequel le composé à base de Bi est utilisé dans une seule des étapes (a).

13. Procédé selon la revendication 12, comprenant au moins deux étapes (a) et dans lequel le composé à base de Bi est utilisé dans la première étape (a).

14. Procédé selon la revendication 1, comprenant en outre, dans les étapes (a), l'utilisation d'un composé donneur d'électrons choisi dans le groupe constitué par les esters alkyliques et aryliques d'acides polycarboxyliques aromatiques éventuellement substitués, les esters d'acides maloniques, les esters d'acides glutariques, les esters d'acides maléiques, les esters d'acides succiniques, les dérivés de diols choisis parmi les dicarbamates, les monoesters monocarbamates et les monoesters monocarbonates et les 1,3-diéthers de formule : 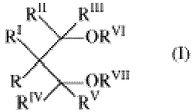 dans laquelle R, R¹, R^{II} R^{III}, R^{IV} et R^{V} sont identiques ou différents les uns des autres et représentent des hydrogène ou des radicaux hydrocarbonés comprenant 1 à 18 atomes de carbone et R^{VI} et R^{VII} sont identiques ou différents l'un de l'autre et présentent la même signification que R-R^{V} sauf que R^{VI} et R^{VII} ne peuvent pas représenter hydrogène ; et l'un ou plusieurs des groupes R-R^{VII} peuvent être liés pour former un cycle.

15. Procédé selon la revendication 13, dans lequel le donneur interne est utilisé au moins dans la première étape (a).
